# EUROPÄISCHE PATENTSCHRIFT

(11) **EP 1 726 473 B1**
(45) Veröffentlichungstag und Bekanntmachung des Hinweises auf die Patenterteilung: **14.01.2009**
(21) Anmeldenummer: 06114409.3
(22) Anmeldetag: 23.05.2006
(51) Int. Cl.: B60L 5/22

(54) **Kraftmesseinrichtung und Verfahren zur Bestimmung einer Seitenführungskraft**
Force measuring device and method for determining a transversal force
Dispositif pour mesurer une force et méthode pour la détermination d'une force transversale

(30) Priorität: 25.05.2005 DE 102005024201
(43) Veröffentlichungstag der Anmeldung: 29.11.2006
(73) Patentinhaber: SIEMENS AKTIENGESELLSCHAFT, 80333 München (DE)
(72) Erfinder: Bosselmann, Thomas, 91080, Marloffstein (DE); Theune, Nils-Michael, 90522, Oberasbach (DE)

(56) Entgegenhaltungen:
- DE-A1- 10 249 896
- JP-A- 9 093 709
- US-A- 3 830 990
- PATENT ABSTRACTS OF JAPAN Bd. 012, Nr. 267 (M-722), 26. Juli 1988 (1988-07-26) & JP 63 048103 A (TOYO ELECTRIC MFG CO LTD), 29. Februar 1988 (1988-02-29)
- PATENT ABSTRACTS OF JAPAN Bd. 1997, Nr. 08, 29. August 1997 (1997-08-29) & JP 09 093709 A (TOYO ELECTRIC MFG CO LTD), 4. April 1997 (1997-04-04)

## Beschreibung

Die Erfindung bezieht sich auf eine Kraftmesseinrichtung und ein Verfahren zur Bestimmung einer Seitenführungskraft zwischen einem Fahrdraht einer Oberleitung und einer mit einem Grundkörper, einem Schleifelement und zwei Endhörnern ausgeführten Stromabnehmerschleifleiste eines Schienentriebfahrzeuges. Eine entsprechende Einrichtung und ein entsprechendes Verfahren zur Messung der Kontaktkraft zwischen einem Stromabnehmer und einem Fahrdraht, der zur elektrischen Energieversorgung eines Schienentriebfahrzeuges bestimmt ist, gehen aus der DE 102 49 896 A1 hervor.

Ein Schienentriebfahrzeug wird über einen elektrischen (Strom-)Leiter in Form eines Fahrdrahtes als Teil einer Oberleitung mit elektrischer Energie versorgt. Die Energie gelangt mittels eines mit dem Fahrdraht in mechanischem Schleifkontakt stehenden Stromabnehmers von der Oberleitung über eine Schleifleiste des Stromabnehmers zum Schienentriebfahrzeug. Zur gleichmäßigen Abnutzung der Schleifleiste weist der Fahrdraht in der Regel eine zickzackförmige Fahrdrahtseitenlage auf. Bei immer höher werdenden Endgeschwindigkeiten moderner Schienentriebfahrzeuge gewinnt die zuverlässige Interaktion zwischen Stromabnehmer und Oberleitung immer mehr an Bedeutung.

So kann die Presskraft des Stromabnehmers an den Fahrdraht unangemessen sein. Bei überhöhten Anpresskräften, die auch Kontaktkräfte genannt werden, wird der Fahrdraht und auch die Schleifleiste einem übermäßigen Verschleiß ausgesetzt. Bei zu niedrigen Kontaktkräften kann es im Fahrbetrieb auch zu Kontaktverlusten kommen, die Lichtbögen zwischen Fahrdraht und Schleifleiste hervorrufen können. Durch die sehr hohen Temperaturen im Lichtbogen können Schäden durch Materialabtrag am Fahrdraht und am Stromabnehmer entstehen. Weist die Schleifleiste beispielsweise Ausbruchstellen oder Riefen auf, kann im Fahrbetrieb der Fahrdraht aufgrund der zickzackförmigen Fahrdrahtseitenlage kurzzeitig in diesen Ausbruchstellen bzw. Riefen mitgeführt werden. Der Fahrdraht gelangt aus diesen erst wieder heraus, wenn die durch den Fahrdrahtversatz hervorgerufene seitliche Auslenkung eine ausreichend große Vorspannung erreicht hat. Dies kann zu unspezifischen Auslenkungen des gesamten Kettenwerks führen. Im schlimmsten Fall kann es dabei zu einer "Entgleisung" des Stromabnehmers kommen.

Gemäß DE 102 49 896 A1 sind ein Verfahren und eine Einrichtung zur Messung der Kontaktkraft, die von einem Stromabnehmer auf einen Fahrdraht ausgeübt wird, angegeben. Die vom Stromabnehmer auf den Fahrdraht wirkenden Kräfte werden hierbei mit Hilfe von Faser-Bragg-Gitter-Sensoren (FBG-Sensoren) gemessen, die unmittelbar an der Schleifleiste oder an einem zwischen Schleifleiste und Wippe des Stromabnehmers angeordneten Deformationselement befestigt werden. Bei Krafteinwirkung der Schleifleiste verformen sich die FBG-Sensoren bzw. verformt sich das Deformationselement und somit auch die entsprechend an diesem angeordneten FBG-Sensoren. Die Verformung der optischen Sensoren liefert dabei Informationen über das Ausmaß der Krafteinwirkung des Stromabnehmers auf den Fahrdraht. Seitlich auf den Stromabnehmer wirkende Kontaktkräfte und auch Seitenführungskräfte, die beispielsweise beim Mitführen des Fahrdrahtes in Riefen oder Ausbruchstellen der Schleifleiste auftreten, können jedoch nicht genau gemessen werden.

Der Erfindung liegt nun die Aufgabe zugrunde, eine Einrichtung und ein Verfahren anzugeben, die eine exaktere Bestimmung von Seitenführungskräften ermöglichen.

Zur Lösung der sich auf eine Kraftmesseinrichtung beziehende Aufgabe sind die Merkmale des Patentanspruchs 1 vorgesehen.

Bei der erfindungsgemäßen Kraftmesseinrichtung handelt es sich um eine Kraftmesseinrichtung zur Bestimmung einer Seitenführungskraft zwischen einem Fahrdraht einer Oberleitung und einer mit einem Grundkörper, einem Schleifelement und zwei Endhörnern ausgeführten Stromabnehmerschleifleiste eines Schienentriebfahrzeuges, welche Einrichtung folgende Teile umfasst, nämlich
- Verbindungsmittel zum Verbinden der Endhörner mit dem Grundkörper,
- mindestens einen in oder an mindestens einem Verbindungsmittel angeordneten, als optischer Dehnungssensor ausgebildeten Faser-Bragg-Gitter-Sensor, wobei
   - das mindestens eine Verbindungsmittel unter Einwirkung der Seitenführungskraft verformbar ist und
   - der mindestens eine Faser-Bragg-Gitter-Sensor mit der seitenführungskraftbedingten Verformung des mindestens einen Verbindungsmittels verformbar ist,
- Einspeisemittel zur Einspeisung eines Lichtsignals mit einem vorbestimmten Wellenlängengehalt in den mindestens einen eine Schwerpunktswellenlänge aufweisenden Faser-Bragg-Gitter-Sensor, wobei die Verformung des mindestens einen Faser-Bragg-Gitter-Sensors mit einer Änderung der Schwerpunktswellenlänge verbunden ist,
und
- Auswertemittel zur Bestimmung eines Messwertes für die Seitenführungskraft aus einem vom mindestens einen Faser-Bragg-Gitter-Sensor herkommenden Lichtsignal, wobei mit der verformungsbedingten Änderung der Schwerpunktswellenlänge des Faser-Bragg-Gitter-Sensors eine Änderung des Wellenlängengehalts des vom mindestens einen Faser-Bragg-Gitter-Sensor herkommenden Lichtsignals verbunden ist.

Durch das Anbringen mindestens eines Faser-Bragg-Gitter-Sensors als Dehnungssensor in oder an mindestens einem Verbindungsmittel lassen sich während des Fahrbetriebes die auf die Schleifleiste durch den Fahrdraht einwirkenden Seitenführungskräfte genau quantifizieren. Es wird der Umstand ausgenutzt, dass gerade in den entsprechenden Verbindungsmitteln, welche die jeweiligen Endhörner mit dem Grundkörper verbinden, aufgrund von Hebelwirkungen bei entlang des Schleifelementes und quer zur Fahrtrichtung gerichteten Kräften die größten mechanischen Spannungen auftreten. Dabei ist für den mindestens einen Faser-Bragg-Gitter-Sensor keine elektrische Energieversorgung auf Hochspannungspotential nötig. Vielmehr können die Energieversorgung und das Signalauslesen im Innern des Schienentriebfahrzeugs und damit auf Erdpotential erfolgen. Der Stromabnehmer, an dem der Faser-Bragg-Gitter-Sensor angeordnet ist, kann also ohne weiteres während des Messvorgangs unter elektrischer (Hoch)Spannung stehen. Die mit der Kraftmesseinrichtung gemäß der Erfindung gewonnenen Messwerte können insbesondere Auskunft über die Beschaffenheit der Schleifleistenoberfläche und im speziellen des Schleifelementes und andererseits über die Oberleitungsqualität liefern. Somit können Instandsetzungsintervallen verlängert und optimiert werden.

Mittels der Einrichtung gemäß der Erfindung lässt sich des Weiteren ein preiswertes Online-Monitoring-System aufbauen, welches auf jedes Schienentriebfahrzeug montiert werden kann. Einschränkungen hinsichtlich der Verfügbarkeit durch Aufladung einer Batterie treten bei diesem System dann nicht auf. Somit können die EU-Richtlinien zur Interoperabilität von Bahnsystemen leicht erfüllt werden.

Vorteilhafte Ausgestaltungen der Kraftmesseinrichtung gemäß der Erfindung ergeben sich aus den von Anspruch 1 abhängigen Ansprüchen.

Es ist insbesondere vorteilhaft, wenn als Verbindungsmittel Befestigungsmittel vorgesehen werden, wobei mindestens ein Befestigungsmittel mindestens eine Bohrung oder Nut aufweist und der mindestens eine Faser-Bragg-Gitter-Sensor in der mindestens einen Bohrung bzw. Nut des mindestens einen Befestigungsmittels angeordnet ist. Es lassen sich besonders einfach und ohne großen Aufwand Befestigungsmittel, die zum Befestigen der jeweiligen Endhörner am Grundkörper vorgesehen sind, mit Bohrungen oder Nuten versehen. Da FBG-Sensoren typischer Weise einen Durchmesser von bis zu 200 µm aufweisen, können die Bohrungen oder Nuten derart dimensioniert sein, dass sie die Funktionalität und Stabilität der Befestigungsmittel nicht beeinflussen.

Von Vorteil ist, wenn mehrere in der mindestens einen Bohrung bzw. Nut des mindestens einen Befestigungsmittels angeordnete, als optische Dehnungssensoren ausgebildete Faser-Bragg-Gitter-Sensoren vorgesehen sind. Dabei wird ausgenutzt, dass FBG-Sensoren sich durch ihre besondere Multiplexfähigkeit auszeichnen. Zur besseren Unterscheidbarkeit können die in einem Lichtwellenleiter angeordneten FBG-Sensoren vorzugsweise jeweils eine voneinander verschiedene Schwerpunktswellenlänge aufweisen. Die Schwerpunktswellenlängen von mehreren FBG-Sensoren eines Lichtwellenleiters müssen jedoch gezwungenermaßen nicht unterschiedlich sein, wenn zur Unterscheidung der Antwortsignale verschiedener FBG-Sensoren beispielsweise ein OTDR (Optical Time Domain Reflectometer) verwendet wird. Durch eine Verteilung mehrerer FBG-Sensoren in einem Befestigungsmittel ist mit den durch die seitenführungskraftbedingte Verformung des Befestigungsmittels entsprechend verformten FBG-Sensoren eine mechanische Spannungsverteilung im Befestigungsmittel bestimmbar, so dass beispielsweise die exakte Richtung der wirkenden Seitenführungskräfte ermittelbar ist.

Es ist günstig, wenn mehrere Befestigungsmittel Bohrungen bzw. Nuten aufweisen und in jeder Bohrung bzw. Nut eine oder mehrere als optische Dehnungssensoren ausgebildete Faser-Bragg-Gitter-Sensoren angeordnet sind. Auch hiermit ist die exakte Richtung der wirkenden Seitenführungskräfte ermittelbar.

Vorteilhaft ist, wenn als Befestigungsmittel Schrauben oder Bolzen vorgesehen sind. Mit Schrauben oder Bolzen ist trotz versehener Bohrung ein fester und stabiler Halt der einzelnen Schleifleistenelemente gewährleistet. So sind mit dem Austausch von Standartschrauben durch mit FBG-Sensoren versehene Schrauben auch bereits in Betrieb genommene Stromabnehmer umrüstbar.

Die das Verfahren betreffende Aufgabe wird erfindungsgemäß durch die Merkmale in Patentanspruch 6 gelöst.

Bei dem erfindungsgemäßen Verfahren handelt es sich um ein Verfahren zur Bestimmung einer Seitenführungskraft zwischen einem Fahrdraht einer Oberleitung und einer mit einem Grundkörper, einem Schleifelement und zwei Endhörnern ausgeführten Stromabnehmerschleifleiste eines Schienentriebfahrzeuges, bei welchem Verfahren
- die Endhörner mittels Verbindungsmitteln mit dem Grundkörper verbunden werden,
- mindestens ein als optischer Dehnungssensor ausgebildeter Faser-Bragg-Gitter-Sensor in oder an mindestens einem Verbindungsmittel angeordnet wird, wobei
   - das mindestens eine Verbindungsmittel unter Einwirkung der Seitenführungskraft verformt wird und
   - der mindestens eine Faser-Bragg-Gitter-Sensor mit der seitenführungskraftbedingten Verformung des mindestens einen Verbindungsmittels verformt wird,
- ein Lichtsignal mit einem vorbestimmten Wellenlängengehalt in den mindestens einen eine Schwerpunktswellenlänge aufweisenden Faser-Bragg-Gitter-Sensor eingespeist wird, wobei sich mit der Verformung des mindestens einen Faser-Bragg-Gitter-Sensors die Schwerpunktswellenlänge ändert,
und
- ein vom mindestens einen Faser-Bragg-Gitter-Sensor herkommendes Lichtsignal ausgewertet wird, wobei mit der verformungsbedingten Änderung der Schwerpunktswellenlänge des mindestens einen Faser-Bragg-Gitter-Sensors eine Änderung des Wellenlängengehalt des vom mindestens einen Faser-Bragg-Gitter-Sensor herkommenden Lichtsignals verbunden ist.

Beim erfindungsgemäßen Verfahren ergeben sich die vorstehend für die erfindungsgemäße Kraftmesseinrichtung erläuterten Vorteile.

Vorteilhafte Ausgestaltungen des Verfahrens gemäß der Erfindung ergeben sich aus den von Anspruch 6 abhängigen Ansprüchen.

Es ist insbesondere vorteilhaft, wenn als Verbindungsmittel Befestigungsmittel vorgesehen werden, wobei mindestens ein Befestigungsmittel mindestens eine Bohrung oder Nut aufweist und der mindestens eine Faser-Bragg-Gitter-Sensor in der mindestens einen Bohrung bzw. Nut des mindestens einen Befestigungsmittels angeordnet ist. Es lassen sich besonders einfach und ohne großen Aufwand Befestigungsmittel, die zum Befestigen der jeweiligen Endhörner am Grundkörper vorgesehen sind, mit Bohrungen oder Nuten versehen. Da FBG-Sensoren typischer Weise einen Durchmesser von bis zu 200 µm aufweisen, können die Bohrungen oder Nuten derart dimensioniert sein, dass sie die Funktionalität und Stabilität der Befestigungsmittel nicht beeinflussen.

Von Vorteil ist, wenn mehrere als optische Dehnungssensoren ausgebildete Faser-Bragg-Gitter-Sensoren in der mindestens einen Bohrung bzw. Nut des mindestens einen Befestigungsmittels angeordnet werden. Durch eine Verteilung mehrerer FBG-Sensoren in einem Befestigungsmittel kann mit den durch die seitenführungskraftbedingte Verformung des Befestigungsmittels entsprechend verformten FBG-Sensoren eine mechanische Spannungsverteilung im Befestigungsmittel bestimmt werden, so dass beispielsweise die exakte Richtung der wirkenden Seitenführungskräfte ermittelt werden kann.

Günstig ist, wenn mehrere Befestigungsmittel mit Bohrungen bzw. Nuten versehen werden und in jeder Bohrung bzw. eine oder mehrere als optische Dehnungssensoren ausgebildete Faser-Bragg-Gitter-Sensoren angeordnet werden. Auch hiermit kann die exakte Richtung der wirkenden Seitenführungskräfte ermittelt werden

Vorteilhaft ist, wenn als Befestigungsmittel Schrauben oder Bolzen vorgesehen werden. Mit Schrauben oder Bolzen ist trotz versehener Bohrung ein fester und stabiler Halt der einzelnen Schleifleistenelemente gewährleistet. So ist es möglich, mit dem Austausch von Standartschrauben durch mit FBG-Sensoren versehenen Schrauben auch bereits in Betrieb genommene Stromabnehmer umzurüsten.

Bevorzugte, jedoch keinesfalls einschränkende Ausführungsbeispiele der Vorrichtung werden nunmehr anhand der Zeichnung näher erläutert. Zur Veranschaulichung ist die Zeichnung nicht maßstäblich ausgeführt und gewisse Merkmale sind schematisiert dargestellt. Im Einzelnen zeigen
- Figur 1: eine Kraftmesseinrichtung zur Bestimmung einer Seitenführungskraft zwischen einem Fahrdraht und einer Stromabnehmerschleifleiste und
- Figur 2: einen Ausschnitt der Stromabnehmerschleifleiste gemäß Figur 1 mit mit FBG-Sensoren versehenen Befestigungsmitteln.

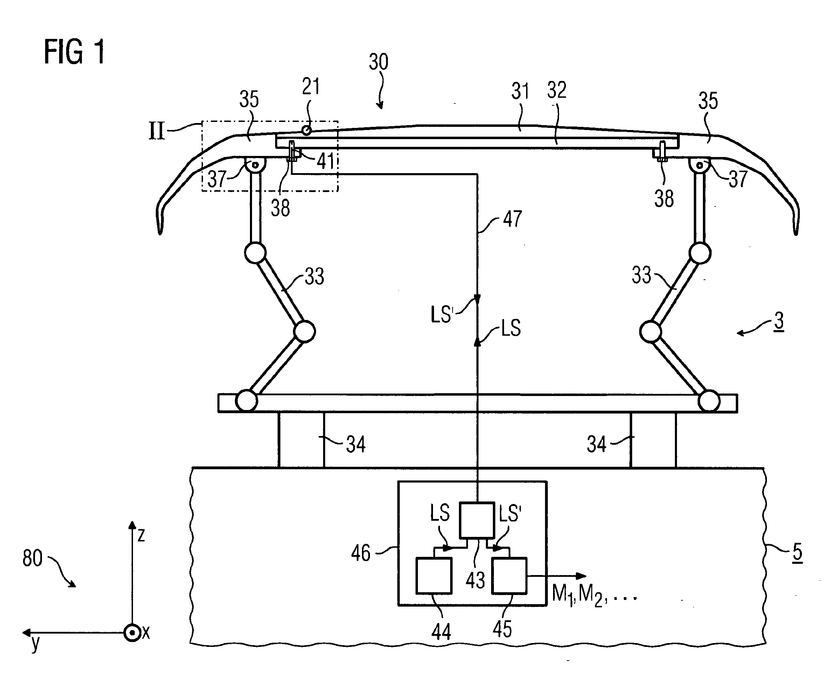

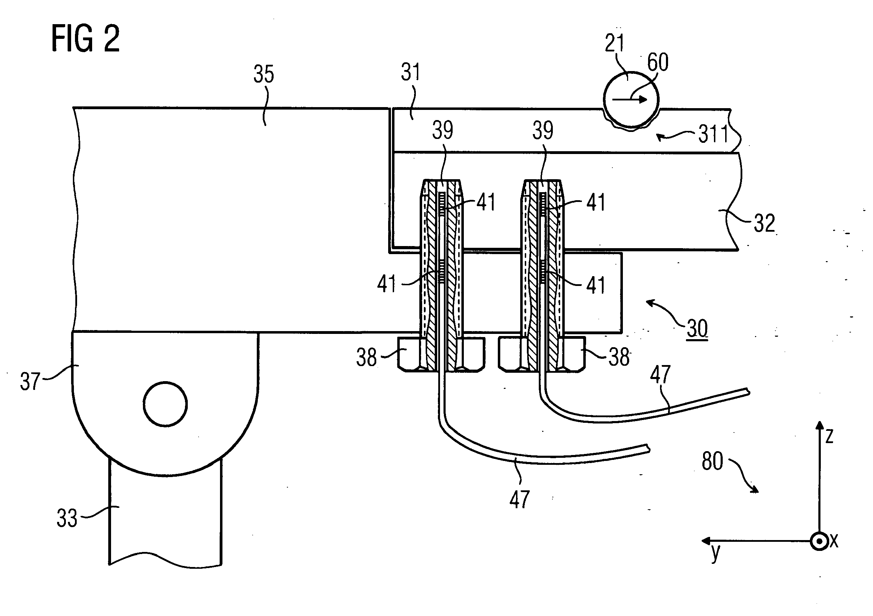

Einander entsprechende Teile sind in den Figuren 1 und 2 mit denselben Bezugszeichen versehen.

In Figur 1 ist eine Kraftmesseinrichtung zur Bestimmung der Seitenführungskraft zwischen einem Fahrdraht 21 einer Oberleitung und einer Schleifleiste 30 eines Stromabnehmers 3 eines Schienentriebfahrzeuges 5 dargestellt. Die Schleifleiste 30 weist dabei einen Grundkörper 32, ein Schleifelement 31 und an den Enden jeweils ein Endhorn 35 auf. Der konstruktive Aufbau des an sich bekannten Stromabnehmers 3 umfasst im Wesentlichen die Schleifleiste 30, eine Wippe 33 sowie elektrische Isolatoren 34, die die zuvor genannten Komponenten des Stromabnehmers 3 gegenüber dem Schienentriebfahrzeug 5 elektrisch isolieren. Die Schleifleiste 30 ist über die beiden Endhörner 35 mittels jeweils eines Verbindungselementes 37 mit der Wippe 33 verbunden. Der als Aluminiumprofil ausgebildete Grundkörper 32 mit dem Schleifelement 31, das hier eine Karbonleiste ist, ist an seinem jeweiligen Ende mittels Verbindungsmitteln 38, die hier als Befestigungsmittel, insbesondere Schrauben, ausgeführt sind, mit den Endhörnern 35 verbunden. In Betrieb bewegt sich das Schienentriebfahrzeug 5 gemäß einem rechtwinkligen x-y-z-Koordinatensystems 80 in x-Richtung fort. Das Schienentriebfahrzeug 5 bezieht seine Energie über dem Fahrdraht 21.

Zur Erfassung der Seitenführungskraft zwischen dem Fahrdraht 21 und der Schleifleiste 30 sind ein oder mehrere in den Verbindungsmitteln 38 angeordnete optisch abfragbare Faser-Bragg-Gitter-Sensoren 41 vorgesehen. Bei mehreren FBG-Sensoren 41 hat jeder einzelne Sensor 41 eine spezifische Schwerpunktswellenlänge - die so genannte Bragg-Wellenlänge, die sich insbesondere von derjenigen der übrigen Sensoren 41 unterscheidet. Die FBG-Sensoren 41 werden von einem Lichtsignal LS, das von einer breitbandigen Lichtquelle 44 erzeugt wird, abgefragt. Über einen Koppler 43 und einen Lichtwellenleiter 47 wird das Lichtsignal LS in die FBG-Sensoren 41 eingespeist. In jedem FBG-Sensor 41 wird von dem eingespeisten Lichtsignal LS ein Anteil mit der jeweiligen Schwerpunktswellenlänge als Teil-Reflex-Lichtsignal zurückreflektiert. Der übrige Anteil des Lichtsignals LS passiert dagegen den betreffenden FBG-Sensor 41 und trifft gegebenenfalls auf den nächsten FBG-Sensor 41. Am Koppler 43 steht dann ein von den FBG-Sensoren 41 zurückreflektiertes Lichtsignal LS' an, das sich aus den Teil-Reflex-Lichtsignalen der einzelnen FBG-Sensoren 41 zusammensetzt.

Im so genannten Transmissionsbetrieb (in den Figuren nicht gezeigt) muss im Gegensatz zum Reflexionsbetrieb das gesamte von der Lichtquelle 44 ausgesandte Wellenlängenspektrum auf fehlende Wellenlängenbereiche untersucht werden. Denn diese fehlenden Wellenlängenbereiche entsprechen den jeweiligen Schwerpunktswellenlängen der einzelnen Sensoren 41. Im Transmissionsbetrieb kann auf den Koppler 43 verzichtet werden. Hier wird an einem Ende des Lichtwellenleiters 47 das Lichtsignal LS mittels der Lichtquelle 44 eingekoppelt und am anderen Ende des Lichtwellenleiters 47 von einem optoelektrischen Wandler detektiert.

Das von den FBG-Sensoren 41 herkommende, in den Koppler 43 wieder eingespeiste Lichtsignal LS' wird vom Koppler 43 zu einer Auswerteeinheit 45 geleitet. Diese umfasst insbesondere einen optoelektrischen Wandler, einen Analog/Digital-Wandler und ein digitaler Signalprozessor. Der optoelektrische Wandler weist vorteilhafter Weise ein spektral selektives Element zur Selektion der einzelnen Teil-Reflex-Lichtsignale, beispielsweise in Gestalt eines Polychromators, und einen gegebenenfalls auch mehrteiligen Lichtempfänger auf. Zur Analyse des Lichtspektrums sind Gitter- oder Beugungsspektrometer denkbar. Im Anschluss an die optoelektronische Wandlung findet im Analog/Digital-Wandler eine Analog/Digital-Wandlung statt. Das digitalisierte Ausgangssignal des Analog/Digital-Wandlers wird dem digitalen Signalprozessor zugeführt, mittels welchem Messwerte M1, M2,... für die in den FBG-Sensoren 41 erfassten Seitenführungskräfte ermittelt werden.

Die Lichtquelle 44, der Koppler 43 und die Auswerteeinheit 45 sind in einer Sende/Empfangseinheit 46 zusammengefasst, wobei die Lichtquelle 44 und der Koppler 43 als Einspeisemittel zur Einspeisung des Lichtsignals LS in die FBG-Sensoren 41 sowie die Auswerteeinheit 45 mit optoelektrischem Wandler, Analog/ Digital-Wandler und digitalem Signalprozessor als Auswertemittel zur Bestimmung eines Messwertes M1, M2,... für die von den FBG-Sensoren 41 jeweils erfasste Seitenführungskraft aufgefasst werden können. In einem anderen nicht gezeigten Ausführungsbeispiel können diese Untereinheiten oder Teile davon auch baulich voneinander getrennt, also nicht als gemeinsame Sende-/Empfangseinheit 46, ausgebildet sein. Außerdem ist auch eine rein analoge Auswertung, beispielsweise mittels einer fest verdrahteten elektronischen Schaltung möglich. Dann wäre kein Analog/Digital-Wandler vorhanden und die Auswerteeinheit 45 mittels Analogtechnik realisiert.

Die Sende-/Empfangseinheit 46 des in Figur 1 gezeigten Beispiels befindet sich auf Erdpotential, wo hingegen der Fahrdraht 21 auf einem in der Bahn-Energieversorgung üblichem Potential, insbesondere von 15 bis 25 kV, liegt. Die Überbrückung dieser Potentialdifferenz erfolgt mittels des Lichtwellenleiters 47, über den auch das eingespeiste Lichtsignal LS und das von den FBG-Sensoren 41 herkommende Lichtsignal LS' übertragen werden. Dadurch ergibt sich ein besonders kompakter Aufbau. Der Lichtwellenleiter 47 besteht aus einem dielektrischen Material, wie beispielsweise Glas oder Kunststoff. Damit sind keine gesonderten Maßnahmen zur elektrischen Isolation erforderlich.

Die in der Sende-/Empfangseinheit 46 erzeugten Messwerte M1, M2,... werden beispielsweise mittels einer Funkübertragung zu einer in Figur 1 nicht dargestellten Datenerfassungseinheit übermittelt. Die Datenübertragung kann jedoch grundsätzlich auch leitungsgebunden elektrisch oder optisch erfolgen. Außerdem können die Sende-/Empfangseinheit 46 und die Datenerfassungseinheit auch als gemeinsame Einheit ausgebildet sein.

In Figur 2 ist der in Figur 1 mit II gekennzeichnete Ausschnitt vergrößert und detaillierter dargestellt. Für die Verbindung und Befestigung des abgebildeten Endhorns 35 mit dem Grundkörper 32 sind als Beispiel zwei Schrauben als Verbindungs- bzw. Befestigungsmittel 38 vorgesehen. Denkbar ist auch, eine oder auch mehr als zwei Schrauben 38 zu verwenden. Die Schrauben 38 weisen jeweils eine Bohrung 39 auf, in welcher jeweils ein Lichtwellenleiter 47 angeordnet ist. Wenn es die Stabilität der Schrauben 38 zulässt, sind auch mehrere mit Lichtwellenleitern 47 versehene Bohrungen 39 in einer Schraube 38 denkbar. Jeder Lichtwellenleiter 47 weist hier beispielhaft zwei in den Lichtwellenleiter 47 eingeschriebene FBG-Sensoren 41 auf. Ein oder auch mehr als zwei FBG-Sensoren 41 je Bohrung 39 sind ebenfalls vorstellbar. Alle FBG-Sensoren 41 sind form- und kraftschlüssig in der jeweiligen Bohrung 39 angeordnet. Die Ausführung gemäß dem Beispiel in Figur 2 ist mit Schrauben 38 als Befestigungsmittel dargestellt. Natürlich sind je nach Konstruktion der Schleifleiste 30 beispielsweise auch Bolzen, Stifte, usw. mit oder anstelle von Schrauben als Verbindungsmittel 38 denkbar. Es ist weiter denkbar, neben oder anstelle von Bohrungen 39 die Verbindungsmittel 38 mit Nuten zu versehen, in welchen ein oder mehrere Lichtwellenleiter 47 angeordnet, insbesondere eingebettet sind(in Figur 2 nicht dargestellt). Hier ist lediglich darauf zu achten, dass die Funktionalität und Stabilität der Verbindungsmittel 38, die beispielsweise als Schraube oder Bolzens ausgeführt sein können, erhalten bleibt.

FBG-Sensoren 41 sind in der Regel sehr kompakt ausgestaltet. Einzelne Sensoren 41 haben typischerweise einen Durchmesser von bis zu 200 µm und eine Länge von bis zu 10 mm. Sie können damit an fast jedem Ort angebracht werden.

In der Momentaufnahme gemäß Figur 2 ist der Fahrdraht 21 in einer Riefe 311 im Schleifelement 31 angeordnet, in welcher er während der weiteren Fortbewegung des Schienetriebfahrzeugs 5 abschnittsweise mitgeführt wird. Aufgrund der zickzackförmigen Bespannung des Fahrdrahtes 21 in Fortbewegungsrichtung ist der Fahrdraht 21 in der Riefe 311 einer zunehmenden Spannung ausgesetzt, bis er beispielsweise aus der Riefe 311 "herausspringt". Die dabei vom Fahrdraht 21 auf das Schleifelement 31 wirkende Kraft ist die zu bestimmende Seitenführungskraft. Als Beispiel ist sie in Figur 2 durch einen Peil 60 in negative y-Richtung zeigend gekennzeichnet. Durch die Krafteinwirkung des Fahrdrahtes 21 auf das Schleifelement 31, tritt im Verbindungsbereich zwischen Grundkörper 32 mit Schleifelement 31 und dem jeweiligen Endhorn 35 eine Scherspannung auf, durch welche mindestens eine Schraube 38 eine Verformung, insbesondere eine Scherdehnung, erfährt. Die FBG-Sensoren 41 sind dabei derart form- und kraftschlüssig in den Bohrungen 39 der Schrauben 38 angebracht, dass zumindest einer der FBG-Sensoren 41 durch die zur Seitenführungskraft proportionale Verformung der mindestens einen Schraube 35 verformt wird. Damit verändert sich die Schwerpunktswellenlänge des zumindest einen Sensors 41 und damit auch der Wellenlängengehalt (= das Wellenlängenspektrum) des vom betreffenden Sensor 41 reflektierten Teil-Reflex-Lichtsignals. Diese Veränderung im Wellenlängengehalt dient als Maß für die zu erfassende Seitenführungskraft.

Mit der Auswertung des von den FBG-Sensoren 41 herkommenden Lichtsignal LS' lässt sich somit aus dem Betrag der entsprechenden Schwerpunktswellenlängenänderung auf die Größe der Seitenführungskraft schließen. Je nach Anforderungen an die Genauigkeit der Messungen ist es denkbar, die Anzahl der in der entsprechenden Bohrung 39 angebrachten FBG-Sensoren 41 zu erhöhen (= bessere Ortsauflösung) oder auch zu erniedrigen.

Die in Figur 2 dargestellte Verteilung der FBG-Sensoren 41 ist nur beispielhaft zu verstehen. Andere Sensor-Verteilungen sind ebenso möglich.

In Figur 1 ist der Übersichtlichkeit halber schematisch ein Lichtwellenleiter 47 angedeutet. Wenn, wie in Figur 2 dargestellt, jeder Bohrung 39 ein Lichtwellenleiter 47 zugeordnet ist, sind in diesem Fall alle Lichtwellenleiter 47 gemeinsam mit dem Koppler 43 zu verbinden.

Im Ausführungsbeispiel gemäß Figur 1 ist nur eine Seite der Schleifleiste 30 mit FBG-Sensoren 41 versehen. Die Kraftmesseinrichtung und das Verfahren gemäß der Erfindung lassen sich ohne weiteres auch auf beide Seiten der Schleifleiste 30 erweitern. Dabei kann der Vorteil der Redundanz ausgenutzt werden, wobei zugleich die Messwertsicherheit erhöht wird.

## Patentansprüche

1. Kraftmesseinrichtung zur Bestimmung einer Seitenführungskraft zwischen einem Fahrdraht (21) einer Oberleitung und einer mit einem Grundkörper (32), einem Schleifelement (31) und zwei Endhörnern (35) ausgeführten Stromabnehmerschleifleiste (30) eines Schienentriebfahrzeuges (5), welche Einrichtung' folgende Teile umfasst, nämlich
- Verbindungsmittel (38) zum Verbinden der Endhörner (35) mit dem Grundkörper (32),
- mindestens einen in oder an mindestens einem Verbindungsmittel (38) angeordneten, als optischer Dehnungssensor ausgebildeten Faser-Bragg-Gitter-Sensor (41), wobei
- das mindestens eine Verbindungsmittel (38) unter Einwirkung der Seitenführungskraft verformbar ist und
- der mindestens eine Faser-Bragg-Gitter-Sensor (41) mit der seitenführungskraftbedingten Verformung des mindestens einen Verbindungsmittels (38) verformbar ist,
- Einspeisemittel (43, 44) zur Einspeisung eines Lichtsignals (LS) mit einem vorbestimmten Wellenlängengehalt in den mindestens einen eine Schwerpunktswellenlänge aufweisenden Faser-Bragg-Gitter-Sensor (41), wobei die Verformung des mindestens einen Faser-Bragg-Gitter-Sensors (41) mit einer Änderung der Schwerpunktswellenlänge verbunden ist,
und
- Auswertemittel (45) zur Bestimmung eines Messwertes (M1, M2) für die Seitenführungskraft aus einem vom mindestens einen Faser-Bragg-Gitter-Sensor (41) herkommenden Lichtsignal (LS'), wobei mit der verformungsbedingten Änderung der Schwerpunktswellenlänge des Faser-Bragg-Gitter-Sensors (41) eine Änderung des Wellenlängengehalt des vom mindestens einen Faser-Bragg-Gitter-Sensor (41) herkommenden Lichtsignals (LS') verbunden ist.

2. Kraftmesseinrichtung nach Anspruch 1, **gekennzeichnet durch** Befestigungsmittel als Verbindungsmittel (38), wobei
- mindestens ein Befestigungsmittel (38) mindestens eine Bohrung (39) oder Nut aufweist und
- der mindestens eine Faser-Bragg-Gitter-Sensor (41) in der mindestens einen Bohrung (39) bzw. Nut des mindestens einen Befestigungsmittels ,(38) angeordnet ist.

3. Kraftmesseinrichtung nach Anspruch 2, **gekennzeichnet durch** mehrere in der mindestens einen Bohrung (39) bzw. Nut des mindestens einen Befestigungsmittels (38) angeordnete, als optische Dehnungssensoren ausgebildete Faser-Bragg-Gitter-Sensoren (41).

4. Kraftmesseinrichtung nach Anspruch 2 oder 3, **dadurch gekennzeichnet, dass** mehrere Befestigungsmittel (38) Bohrungen (39) bzw. Nuten aufweisen und in jeder Bohrung (39) bzw. Nut eine oder mehrere als optische Dehnungssensoren ausgebildete Faser-Bragg-Gitter-Sensoren (41) angeordnet sind.

5. Kraftmesseinrichtung nach einem der Ansprüche 2 bis 4, **gekennzeichnet durch** Schrauben oder Bolzen als Befestigungsmittel (38).

6. Verfahren zur Bestimmung einer Seitenführungskraft zwischen einem Fahrdraht (21) einer Oberleitung und einer mit einem Grundkörper (32), einem Schleifelement (31) und zwei Endhörnern (35) ausgeführten Stromabnehmerschleifleiste (30) eines Schienentriebfahrzeuges (5), bei welchem Verfahren
- die Endhörner (35) mittels Verbindungsmitteln (38) mit dem Grundkörper (32) verbunden werden,
- mindestens ein als optischer Dehnungssensor ausgebildeter Faser-Bragg-Gitter-Sensor (41) in oder an mindestens einem Verbindungsmittel (38) angeordnet wird, wobei
- das mindestens eine Verbindungsmittel (38) unter Einwirkung der Seitenführungskraft verformt wird und
- der mindestens eine Faser-Bragg-Gitter-Sensor (41) mit der seitenführungskraftbedingten Verformung des mindestens einen Verbindungsmittels (38) verformt wird,
- ein Lichtsignal (LS) mit einem vorbestimmten Wellenlängengehalt in den mindestens einen eine Schwerpunktswellenlänge aufweisenden Faser-Bragg-Gitter-Sensor (41) eingespeist wird, wobei sich mit der Verformung des mindestens einen Faser-Bragg-Gitter-Sensors (41) die Schwerpunktswellenlänge ändert,
und
- ein vom mindestens einen Faser-Bragg-Gitter-Sensor (41) herkommendes Lichtsignal (LS') ausgewertet wird, wobei mit der verformungsbedingten Änderung der Schwerpunktswellenlänge des mindestens einen Faser-Bragg-Gitter-Sensors (41) eine Änderung des Wellenlängengehalt des vom mindestens einen Faser-Bragg-Gitter-Sensor (41) herkommenden Lichtsignals (LS') verbunden ist.

7. Verfahren nach Anspruch 6, **dadurch gekennzeichnet, dass** als Verbindungsmittel (38) Befestigungsmittel vorgesehen werden, wobei
- mindestens ein Befestigungsmittel (38) mindestens eine Bohrung (39) oder Nut aufweist und
- der mindestens eine Faser-Bragg-Gitter-Sensor (41) in der mindestens einen Bohrung (39) bzw. Nut des mindestens einen Befestigungsmittels (38) angeordnet ist.

8. Verfahren nach Anspruch 7, **dadurch gekennzeichnet, dass** mehrere als optische Dehnungssensoren ausgebildete Faser-Bragg-Gitter-Sensoren (41) in der mindestens einen Bohrung (39) bzw. Nut des mindestens einen Befestigungsmittels (38) angeordnet werden.

9. Verfahren nach Anspruch 7 oder 8, **dadurch gekennzeichnet, dass** mehrere Befestigungsmittel (38) mit Bohrungen (39) bzw. Nuten versehen werden und in jeder Bohrung (39) bzw. eine oder mehrere als optische Dehnungssensoren ausgebildete Faser-Bragg-Gitter-Sensoren (41) angeordnet werden.

10. Verfahren nach einem der Ansprüche 7 bis 9, **dadurch gekennzeichnet, dass** Schrauben oder Bolzen als Befestigungsmittel (38) vorgesehen werden.

## Claims

1. Force-measuring device for determining a lateral guiding force between a contact wire (21) of an overhead contact line and a current collector contact bar (30), designed with a basic body (32), a sliding element (31) and two end horns (35), of a rail traction vehicle (5), which device comprises the following parts, specifically
- connecting means (38) for connecting the end horns (35) to the basic body (32),
- at least one fiber Bragg grating sensor (41) which is arranged in or on at least one connecting means (38) and is designed as an optical strain gauge, in which case
- the at least one connecting means (38) can be deformed by the action of the lateral guiding force, and
- the at least one fiber Bragg grating sensor (41) can be deformed with the deformation, caused by the lateral guiding force, of the at least one connecting means (38),
- injection means (43, 44) for injecting a light signal (LS) with a predetermined wavelength content into the at least one fiber Bragg grating sensor (41) having a centroid wavelength, the deformation of the at least one fiber Bragg grating sensor (41) being associated with a change in the centroid wavelength,
and
- evaluation means (45) for determining a measured value (M1, M2) for the lateral guiding force from a light signal (LS') originating from the at least one fiber Bragg grating sensor (41), a change in the wavelength content of the light signal (LS') originating from the at least one fiber Bragg grating sensor (41) being associated with the change, caused by deformation, in the centroid wavelength of the fiber Bragg grating sensor (41).

2. Force-measuring device according to Claim 1, **characterized by** fastening means as connecting means (38),
- at least one fastening means (38) having at least one bore (39) or groove, and
- the at least one fiber Bragg grating sensor (41) being arranged in the at least one bore (39) or groove of the at least one fastening means (38).

3. Force-measuring device according to Claim 2, **characterized by** a number of fiber Bragg grating sensors (41) which are arranged in the at least one bore (39) or groove of the at least one fastening means (38) and are designed as optical strain gauges.

4. Force-measuring device according to Claim 2 or 3, **characterized in that** a number of fastening means (38) have bores (39) or grooves, and one or more fiber Bragg grating sensors (41) designed as optical strain gauges are arranged in each bore (39) or groove.

5. Force-measuring device according to one of Claims 2 to 4, **characterized by** screws or bolts as fastening means (38).

6. Method for determining a lateral guiding force between a contact wire (21) of an overhead contact line and a current collector contact bar (30), designed with a basic body (32), a sliding element (31) and two end horns (35), of a rail traction vehicle (5), in which method
- the end horns (35) are connected to the basic body (32) with the aid of connecting means (38),
- at least one fiber Bragg grating sensor (41) designed as an optical strain gauge is arranged in or on at least one connecting means (38),
- the at least one connecting means (38) being deformed by the action of the lateral guiding force, and
- the at least one fiber Bragg grating sensor (41) being deformed with the deformation, caused by the lateral guiding force, of the at least one connecting means (38),
- a light signal (LS) with a predetermined wavelength content being injected into the at least one fiber Bragg grating sensor (41) having a centroid wavelength, the centroid wavelength changing with the deformation of the at least one fiber Bragg grating sensor (41),
and
- a light signal (LS') originating from the at least one fiber Bragg grating sensor (41) being evaluated, a change in the wavelength content of the light signal (LS') originating from the at least one fiber Bragg grating sensor (41) being associated with the change, caused by deformation, in the centroid wavelength of the at least one fiber Bragg grating sensor (41).

7. Method according to Claim 6, **characterized in that** fastening means are provided as connecting means (38), in which case
- at least one fastening means (38) has at least one bore (39) or groove, and
- the at least one fiber Bragg grating sensor (41) is arranged in the at least one bore (39) or groove of the at least one fastening means (38).

8. Method according to Claim 7, **characterized in that** a number of fiber Bragg grating sensors (41) designed as optical strain gauges are arranged in the at least one bore (39) or groove of the at least one fastening means (38).

9. Method according to Claim 7 or 8, **characterized in that** a number of fastening means (38) are provided with bores (39) or grooves, and one or more fiber Bragg grating sensors (41) designed as optical strain gauges are arranged in each bore (39) or groove.

10. Method according to one of Claims 7 to 9, **characterized in that** screws or bolts are provided as fastening means (38).

## Revendications

1. Dispositif de mesure de force pour la détermination d'une force de guidage latéral entre un fil de contact ( 21 ) d'une caténaire et un frotteur de pantographe ( 30 ), réalisé avec un corps de base ( 32 ), un élément frotteur ( 31 ) et deux cornes terminales ( 35 ), d'un véhicule moteur ferroviaire ( 5 ), le dispositif comprenant les éléments suivants, à savoir
- des moyens de liaison ( 38 ) pour relier les cornes terminales ( 35 ) au corps de base ( 32 ),
- au moins un capteur ( 41 ) à réseau de Bragg à fibres, disposé dans ou sur au moins un moyen de liaison ( 38 ) et réalisé sous forme de capteur optique de la dilatation, sachant que
- le au moins un moyen de liaison ( 38 ) est déformable sous l'action de la force de guidage latéral, et
- le au moins un capteur ( 41 ) à réseau de Bragg à fibres est déformable avec la déformation, due à la force de guidage latéral, du au moins un moyen de liaison ( 38 ),
- des moyens d'alimentation ( 43, 44 ) pour envoyer un signal lumineux ( LS ) ayant un contenu prédéfini de longueur d'onde dans le au moins un capteur ( 41 ) à réseau de Bragg à fibres ayant une longueur d'onde dominante, la déformation du au moins un capteur ( 41 ) à réseau de Bragg à fibres s'accompagnant d'une modification de la longueur d'onde dominante,
et
- des moyens d'évaluation ( 45 ) pour déterminer une valeur de mesure ( M1, M2 ) pour la force de guidage latéral à partir d'un signal lumineux ( LS' ) provenant du au moins un capteur ( 41 ) à réseau de Bragg à fibres, la modification, due à la déformation, de la longueur d'onde dominante du capteur ( 41 ) à réseau de Bragg à fibres s'accompagnant d'une modification du contenu de longueur d'onde du signal lumineux ( LS' ) provenant du au moins un capteur ( 41 ) à réseau de Bragg à fibres.

2. Dispositif de mesure de force suivant la revendication 1, **caractérisé par** des moyens de fixation comme moyens de liaison ( 38 ), sachant que
- au moins un moyen de fixation ( 38 ) comporte au moins un perçage ( 39 ) ou une rainure, et
- le au moins un capteur ( 41 ) à réseau de Bragg à fibres est disposé dans le au moins un perçage ( 39 ) ou rainure du au moins un moyen de fixation ( 38 ).

3. Dispositif de mesure de force suivant la revendication 2, **caractérisé par** plusieurs capteurs ( 41 ) à réseau de Bragg à fibres disposés dans le au moins un perçage ( 39 ) ou rainure du au moins un moyen de fixation ( 38 ) et réalisés sous forme de capteurs optiques de dilatation.

4. Dispositif de mesure de force suivant la revendication 2 ou 3, **caractérisé en ce que** plusieurs moyens de fixation ( 38 ) comportent des perçages ( 39 ) ou des rainures, et un ou plusieurs capteurs ( 41 ) à réseau de Bragg à fibres réalisés sous forme de capteurs optiques de dilatation sont disposés dans chaque perçage ( 39 ) ou rainure.

5. Dispositif de mesure de force suivant l'une des revendications 2 à 4, **caractérisé par** des vis ou des boulons comme moyens de fixation ( 38 ).

6. Procédé pour la détermination d'une force de guidage latéral entre un fil de contact ( 21 ) d'une caténaire et un frotteur de pantographe ( 30 ), réalisé avec un corps de base ( 32 ), un élément frotteur ( 31 ) et deux cornes terminales ( 35 ), d'un véhicule moteur ferroviaire ( 5 ), procédé suivant lequel
- les cornes terminales ( 35 ) sont reliées au corps de base ( 32 ) via des moyens de liaison ( 38 ),
- au moins un capteur ( 41 ) à réseau de Bragg à fibres, réalisé sous forme de capteur optique de dilatation, est disposé dans ou sur au moins un moyen de liaison ( 38 ), sachant que
- le au moins un moyen de liaison ( 38 ) est déformé sous l'action de la force de guidage latéral, et
- le au moins un capteur ( 41 ) à réseau de Bragg à fibres est déformé avec la déformation, due à la force de guidage latéral, du moyen de liaison ( 38 ),
- un signal lumineux ( LS ) ayant un contenu prédéfini de longueur d'onde est envoyé dans le au moins un capteur ( 41 ) à réseau de Bragg à fibres ayant une longueur d'onde dominante, la longueur d'onde dominante se modifiant avec la déformation du au moins un capteur ( 41 ) à réseau de Bragg à fibres,
et
- un signal lumineux ( LS' ) provenant du au moins un capteur ( 41 ) à réseau de Bragg à fibres est évalué, la modification, due à la déformation, de la longueur d'onde dominante du capteur ( 41 ) à réseau de Bragg à fibres s'accompagnant d'une modification du contenu de longueur d'onde du signal lumineux ( LS' ) provenant du au moins un capteur ( 41 ) à réseau de Bragg à fibres.

7. Procédé suivant la revendication 6, **caractérisé en ce que** des moyens de fixation sont prévus comme moyens de liaison ( 38 ), sachant que
- au moins un moyen de fixation ( 38 ) comporte au moins un perçage ( 39 ) ou une rainure, et
- le au moins un capteur ( 41 ) à réseau de Bragg à fibres est disposé dans le perçage ( 39 ) ou rainure du au moins un moyen de fixation ( 38 ) .

8. Procédé suivant la revendication 7, **caractérisé en ce que** plusieurs capteurs ( 41 ) à réseau de Bragg à fibres réalisés sous forme de capteurs optiques de dilatation sont disposés dans le au moins un perçage ( 39 ) ou la rainure du au moins un moyen de fixation ( 38 ).

9. Procédé suivant la revendication 7 ou 8, **caractérisé en ce que** plusieurs moyens de fixation ( 38 ) sont pourvus de perçages ( 39 ) ou de rainures, et un ou plusieurs capteurs ( 41 ) à réseau de Bragg à fibres réalisés sous forme de capteurs optiques de dilatation sont disposés dans chaque perçage ( 39 ) ou rainure.

10. Procédé suivant l'une des revendications 7 à 9, **caractérisé en ce que** des vis ou des boulons sont prévus comme moyens de fixation ( 38 ).
